# DEMANDE DE BREVET EUROPEEN

(11) **EP 1 550 926 A1**
(43) Date de publication de la demande: **06.07.2005**
(21) Numéro de dépôt: 04293086.7
(22) Date de dépôt: 22.12.2004
(51) Int. Cl.: G05D 23/19

(54) **Procédé de génération d'énergie thermique et appareil électrique domestique mettant en oeuvre un tel procédé**

(30) Priorité: 29.12.2003 FR 0315523
(71) Demandeur: Brandt Industries, 92500 Rueil Malmaison (FR)
(72) Inventeur: Philibert, Emmanuel, 45000 Orleans (FR); Bertrand, Cyrille, 45430 Checy (FR); Chevrier, Jean-Paul, 45590 Saint Cyr en Val (FR)
(74) Mandataire: Stankoff, Hélène

(57) **Abrégé**

Un procédé de génération d'énergie thermique dans une cavité (54) d'un appareil électrique domestique comprend les étapes suivantes :
- acquisition d'une valeur de température de consigne dans une plage de températures comprise entre -30°C et 100°C ; et
- régulation de la température de la cavité (54) en fonction de la valeur de la température de consigne, au moyen de la commande en fonctionnement d'un module à effet thermoélectrique (10).

Utilisation notamment pour conserver au froid et réchauffer des aliments dans une cavité d'un appareil électrique domestique.

## Description

La présente invention concerne un procédé de génération d'énergie thermique dans une cavité d'un appareil électrique domestique.

Elle concerne également un appareil électrique domestique adapté à mettre en oeuvre ce procédé.

De manière générale, la présente invention concerne la génération de chaud ou de froid dans une enceinte d'un appareil électrique domestique, destiné à contenir, de manière nullement limitative, des aliments.

Dans son principe général, ce procédé de génération d'énergie thermique est mis en oeuvre à partir d'un module à effet thermoélectrique, connu également sous le terme de Cellule à Effet Peltier (CEP).

Un tel module thermoélectrique est constitué d'un assemblage d'éléments semi-conducteur, placé entre deux semelles conductrices d'énergie thermique.

Lors du passage d'un courant électrique continu dans un tel module, il apparaît une face dite "froide", qui absorbe des calories, et une face dite "chaude" qui dégage des calories.

Un tel module thermoélectrique constitue donc une pompe à chaleur, c'est-à-dire un dispositif capable de prendre des calories à une source froide pour les restituer à une source chaude.

Une des propriétés d'une Cellule à Effet Peltier est qu'il suffit d'inverser le sens d'alimentation du courant électrique pour alterner les faces chaude et froide de ce module.

Généralement, ces cellules sont utilisées plutôt dans le domaine du refroidissement, pour tenir lieu de pompe à chaleur et permettre l'utilisation d'un dispositif compact et statique à la place d'une pompe à chaleur thermodynamique encombrante et coûteuse.

On connaît par exemple des glacières portatives, pouvant notamment être branchées sur la prise d'un allume-cigare d'un véhicule automobile, permettant de maintenir au froid ou au chaud des denrées alimentaires.

Dans ce type d'appareil, les températures de fonctionnement sont fixes et par exemple égales à 5°C en froid et environ 60°C en chaud, la Cellule à Effet Peltier fonctionnant en continu selon un sens ou un autre d'alimentation en courant.

Cependant, dans un tel dispositif, la température ne peut être régulée et est dépendante de la température extérieure à l'appareil.

Parallèlement à ce type de dispositif, il existe également des tiroirs de réchauffage et de maintien en température d'aliments ou de vaisselles pour des températures dites "chaudes", comprises entre 40°C et 80°C. Ces tiroirs chauffants utilisent des résistances électriques.

La présente invention a pour objet de proposer un nouveau procédé de génération d'énergie thermique et un appareil électrique domestique associé permettant de réguler des températures dans une large gamme de température.

A cet effet, la présente invention vise selon un premier aspect un procédé de génération d'énergie thermique dans une cavité d'un appareil électrique domestique comprenant les étapes suivantes :
- acquisition d'une valeur de température de consigne dans une plage de températures comprise entre -30°C et 100°C ; et
- régulation de la température de la cavité en fonction de la valeur de la température de consigne, au moyen de la commande en fonctionnement d'un module à effet thermoélectrique.

Il est ainsi possible en agissant sur la commande en fonctionnement d'un module à effet thermoélectrique d'obtenir une régulation de la température dans une plage de températures permettant la surgélation, la congélation, le refroidissement des objets placés dans la cavité, et le maintien en température ou le réchauffage de ces mêmes objets.

Le procédé conforme à l'invention permet ainsi de gérer des températures allant de -30°C à 100°C, en utilisant un unique module à effet thermoélectrique, générant soit du chaud, soit du froid dans une cavité.

Selon une caractéristique préférée de l'invention, l'étape de régulation comporte les sous-étapes suivantes :
- détermination d'un premier mode d'alimentation du module à effet thermoélectrique en fonction de la valeur de la température de consigne ; et
- commande en fonctionnement du module à effet thermoélectrique selon le premier mode d'alimentation.

En fonction de la valeur de température de consigne, il est possible de déterminer le mode d'alimentation du module à effet thermoélectrique, selon que l'on souhaite délivrer des calories dans la cavité ou au contraire en absorber.

Selon une autre caractéristique préférée de l'invention, pendant la commande en fonctionnement du module à effet thermoélectrique selon le premier mode d'alimentation, le procédé comporte les étapes suivantes :
- détermination d'un second mode d'alimentation du module à effet thermoélectrique en fonction de la valeur d'une autre température de consigne ; et
- commande en fonctionnement du module à effet thermoélectrique selon le second mode d'alimentation.

A partir de la valeur de la température de consigne demandée, il est possible d'inverser le sens de transfert des calories entre l'intérieur de la cavité et le module thermoélectrique.

De préférence, entre les étapes de commande en fonctionnement du module à effet thermoélectrique respectivement selon le premier mode d'alimentation et le second mode d'alimentation, le procédé comprend une étape d'extinction de l'alimentation électrique du module à effet thermoélectrique et une étape d'extinction de moyens de ventilation associés à ce module à effet thermoélectrique.

En effet, l'inversion trop brusque de la commande en fonctionnement du module à effet thermoélectrique présente un danger de rupture de ce module. Afin de limiter le temps nécessaire d'attente entre l'inversion du mode d'alimentation du module, l'extinction de l'alimentation électrique du module et des moyens de ventilation associés permet d'accélérer le transfert de chaleur par convection entre les deux faces du module thermoélectrique.

Selon un mode de réalisation avantageux de l'invention, le mode d'alimentation du module à effet thermoélectrique est déterminé en fonction de l'appartenance de ladite valeur de température de consigne à une sous-plage de températures choisie parmi au moins deux sous-plages de températures.

Ainsi, il est possible de définir une sous-plage de températures de consigne correspondant à un mode d'alimentation du module à effet thermoélectrique dans lequel celui-ci génère du chaud dans la cavité et une sous-plage de températures de consigne pour laquelle le mode d'alimentation du module à effet thermoélectrique est adapté à générer du froid dans la cavité.

Selon un autre aspect, la présente invention concerne un appareil électrique domestique comprenant une cavité et des moyens de génération d'énergie thermique dans cette cavité. Il comprend un module à effet thermoélectrique adapté à délivrer une énergie thermique à la cavité, des moyens d'acquisition d'une valeur de température de consigne dans une plage de températures comprise entre -30°C et 100°C et des moyens de régulation de la température de la cavité adaptés à commander le fonctionnement du module à effet thermoélectrique en fonction de la valeur de la température de consigne.

Cet appareil électrique domestique est ainsi adapté à mettre en oeuvre le procédé de génération d'énergie thermique décrit précédemment.

Cet appareil est ainsi utilisable notamment dans une cuisine domestique pour permettre de réguler une cavité dans une large gamme de températures, comprises entre -30°C et 100°C.

D'autres particularités et avantages de l'invention apparaîtront encore dans la description ci-après.

Aux dessins annexés, donnés à titre d'exemples non limitatifs :
- la figure 1 est une vue en perspective d'un système d'échangeur thermique comprenant un module thermoélectrique selon un premier mode de réalisation adapté à être mis en oeuvre dans un appareil électrique domestique conforme à l'invention ;
- la figure 2 est une vue de face d'un système d'échangeur thermique de la figure 1 ;
- la figure 3 est une vue en perspective d'un système d'échangeur thermique comprenant un module à effet thermoélectrique selon un second mode de réalisation adapté à être mis en oeuvre dans un appareil électrique domestique conforme à l'invention ;
- la figure 4 est une vue schématique d'un appareil électrique domestique conforme à un premier mode de réalisation de l'invention ;
- la figure 5 est une vue partielle détaillant le fonctionnement d'un appareil électrique domestique mettant en oeuvre un système d'échangeur thermique tel qu'illustré à la figure 1 ;
- la figure 6 est une vue schématique d'un appareil électrique domestique conforme à un second mode de réalisation de l'invention ; et
- la figure 7 est une vue partielle détaillant le fonctionnement d'un appareil électrique domestique, mettant en oeuvre un système d'échangeur thermique tel qu'illustré à la figure 3.

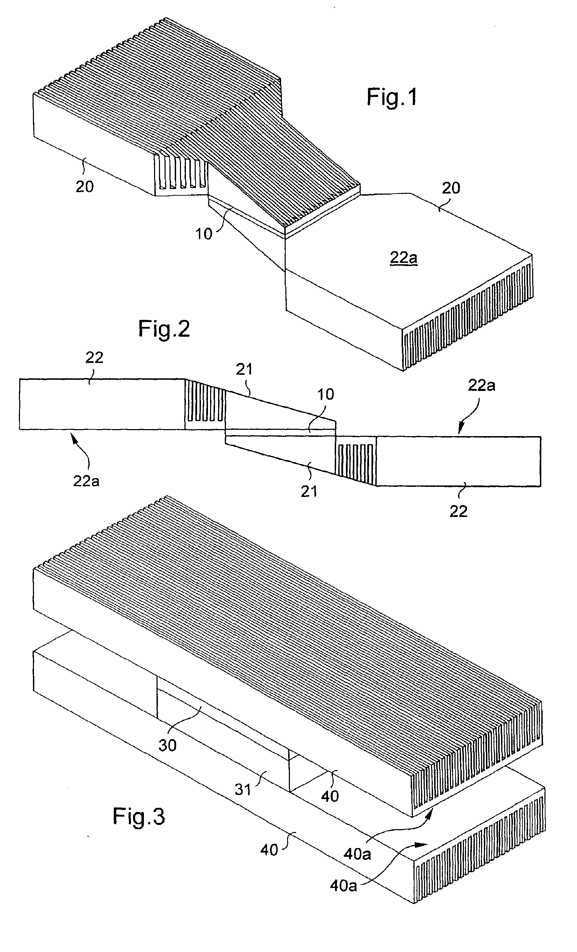

On va décrire tout d'abord en référence aux figures 1 et 2 un premier mode de réalisation d'un module à effet thermoélectrique intégré dans un système d'échangeur thermique.

Le module à effet thermoélectrique 10 dans la suite de ce mode de réalisation est réalisé au moyen d'une Cellule à Effet Peltier. Un tel module 10 a une forme parallélépipédique, par exemple de dimension de 60 mm de côté et 3 mm d'épaisseur, et est alimenté en courant continu. Un tel composant électronique se comporte comme une pompe à chaleur. En fonction du sens d'alimentation électrique, ce module à effet thermoélectrique 10 assure un transfert thermique d'une de ces faces vers l'autre face, présentant ainsi une face dite "froide" et une face dite "chaude".

Lorsqu'un tel module à effet thermoélectrique est associé à une cavité, en mode de fonctionnement "froid", le module thermoélectrique est alimenté en courant de telle sorte que sa face froide se trouve dirigée vers la cavité. A contrario, en mode de fonctionnement "chaud", le sens d'alimentation électrique est inversé de telle sorte que la face dirigée vers l'intérieur de la cavité se trouve être la face "chaude".

Afin d'améliorer les échanges thermiques entre les faces de ce module à effet thermoélectrique 10 et l'extérieur, ce module 10 est associé à des moyens de dissipation d'énergie thermique.

Ces moyens de dissipation d'énergie thermique sont ainsi formés d'échangeurs 20 à ailettes (ou à aiguilles).

Comme bien illustré à la figure 1, ces échangeurs 20 s'étendent respectivement de part et d'autre du module à effet thermoélectrique 10.

Ces échangeurs thermiques 20 ont une forme particulière permettant de déporter la zone proprement dite d'échange thermique de chaque côté du module à effet thermoélectrique.

Ainsi, chaque échangeur 20 comporte une première portion 21 destinée à venir en contact étroit avec l'une des faces du module à effet thermoélectrique 10. Cette première portion 21 constitue ainsi un pont thermique et a pour but de transférer les calories absorbées ou dégagées par la face du module à effet thermoélectrique 10 vers une seconde portion 22 de l'échangeur thermique. Cette seconde portion 22 de l'échangeur constitue à proprement parlé la zone de transfert thermique vers l'extérieur. Ainsi, les premières portions 21 des échangeurs 20 sont disposées en vis-à-vis, de part et d'autre du module à effet thermoélectrique 10 alors qu'au contraire les deux secondes portions 22 des échangeurs 20 s'étendent à l'opposé l'une de l'autre par rapport au module à effet thermoélectrique 10.

Ainsi, le transfert thermique avec l'extérieur au niveau de l'échangeur 20 est réalisé dans une zone éloignée du module à effet thermoélectrique 10. Chaque seconde portion 22 de l'échangeur comporte ainsi une face plane 22a de laquelle s'étendent des ailettes favorisant le transfert de chaleur avec le milieu ambiant. Cette face plane 22a peut être isolée thermiquement, en étant mise par exemple en contact avec une paroi isolante de la cavité à laquelle sera associé le système d'échangeur thermique.

En déportant ainsi les zones de transfert thermique par rapport au module à effet thermoélectrique 10, il est possible de limiter les ponts thermiques et les fuites entre la face froide et la face chaude du module à effet thermoélectrique et ainsi de préserver le rendement global de ce bloc thermique.

Généralement, les moyens de dissipation de chaleur 20 sont réalisés dans des matériaux bons conducteurs de la chaleur, afin d'améliorer encore l'échange de transfert thermique.

On va décrire à présent en référence à la figure 3 un second mode de réalisation d'un module à effet thermoélectrique associé à des moyens de dissipation d'énergie thermique.

Dans ce second mode de réalisation, le module à effet thermoélectrique 30 est également réalisé au moyen d'une Cellule à Effet Peltier sensiblement identique à celle décrite précédemment. Les dimensions peuvent éventuellement être modifiées et par exemple être égales à 40 mm de côté sur 2 mm d'épaisseur.

Le fonctionnement d'un tel module à effet thermoélectrique est identique à celui décrit précédemment en référence à la figure 1.

Ce module à effet thermoélectrique 30 est associé également à des moyens de dissipation d'énergie thermique, constitué également de deux échangeurs 40 disposés de part et d'autre du module à effet thermoélectrique.

Contrairement au premier mode de réalisation, ces échangeurs thermiques 40 sont disposés en vis-à-vis.

Ils sont tous les deux constitués d'une face 40a dont une portion est adaptée à venir en contact avec l'une des faces du module à effet thermoélectrique 30.

Cette face 40a est pourvue d'une série d'ailettes (ou aiguilles) s'étendant à l'opposé du module thermoélectrique 30, propre à favoriser l'échange thermique avec le milieu ambiant.

Dans ce mode de réalisation, une cale 31 est intercalée entre le module à effet thermoélectrique 30 et l'un des échangeurs thermiques 40 de telle sorte que la face 40a de cet échangeur thermique 40 ne vient pas directement en contact avec l'une des faces du module à effet thermoélectrique 30, mais par l'intermédiaire de la cale 31.

Cette cale 31 a pour principale fonction d'éloigner les faces 40a en regard des deux échangeurs thermiques 40, afin de limiter les échanges thermiques entre ces deux échangeurs 40.

Cette cale 31 permettra tout de même le transfert du flux thermique de la face du module à effet thermoélectrique 30 dirigé vers l'échangeur 40 associé.

De manière pratique, les contacts thermiques dans un tel empilement de pièces (échangeur thermique 40, cale 31, module à effet thermoélectrique 30, échangeur thermique 40) sont facilités en intercalant éventuellement une graisse ou une feuille en matériau favorisant les échanges de chaleur.

En outre, un montage serré de ces différents éléments l'un contre l'autre est important pour favoriser les échanges thermiques.

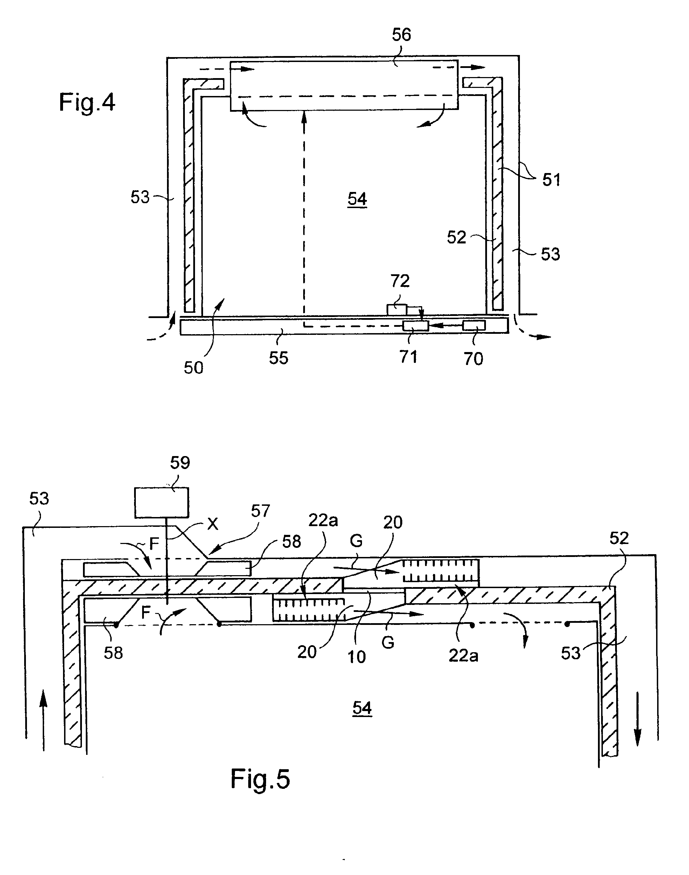

On va décrire à présent en référence aux figures 4 et 5 l'utilisation du système d'échangeur thermique tel que décrit en référence aux figures 1 et 2 intégré dans un appareil électrique domestique.

Dans ce premier mode de réalisation, et de manière nullement limitative, l'appareil électrique domestique se présente sous la forme générale d'un tiroir.

Le tiroir 50 est monté en coulissement sur des glissières (non représentées) à l'intérieur d'un meuble carcasse 51. Ce meuble carcasse 51 constitué d'une carcasse extérieure est doublé d'une paroi intérieure 52 isolante, l'espace entre cette paroi isolante 52 et la paroi extérieure constituant des canaux aérauliques 53 permettant la circulation de l'air autour de l'appareil électrique domestique.

Ce meuble carcasse 51 qui est adapté ainsi à être encastré dans une niche d'une cuisine équipée, permet d'assurer le maintien mécanique de l'ensemble, de supporter les glissières du tiroir coulissant 50 et d'assurer l'isolation thermique ainsi que l'écoulement des flux d'air dans l'appareil électrique domestique.

Le tiroir 50 est constitué d'une partie formant cavité 54 et d'une façade 55 qui constitue le bandeau du tiroir et sur laquelle peuvent être placés une zone de commande en fonctionnement de l'appareil électrique domestique ainsi que des moyens de manipulation de ce tiroir 50.

C'est dans cette cavité 54 du tiroir que seront placés les plats à chauffer ou refroidir ainsi qu'éventuellement des pièces de vaissellerie.

Des moyens de génération d'énergie thermique 56 sont associés à cette cavité 54.

Ces moyens de génération d'énergie thermique 56 sont illustrés en détail à la figure 5. Ils comportent un module à effet thermoélectrique 10 tel que décrit précédemment en référence à la figure 1, ce module à effet thermoélectrique étant adapté à délivrer une énergie thermique à la cavité 54.

Comme décrit précédemment, les faces de ce module à effet thermoélectrique 10 sont associées respectivement à des dissipateurs d'énergie thermique 20 et à des moyens de ventilation 57 associés à ces dissipateurs 20.

Comme expliqué précédemment, les faces 22a de chaque dissipateur thermique 20 sont adaptées à venir en contact avec la paroi intérieure isolante 52 du meuble carcasse de telle sorte que l'échange thermique avec le milieu ambiant au niveau de chacun de ces dissipateurs 20 est réalisé au niveau des ailettes d'échange de chaleur, à l'opposé de chaque face 22a ainsi isolée par la paroi isolante 52.

Dans ce mode de réalisation, les moyens de ventilation 57 sont constitués de deux roues 58 soufflantes montées sur un même axe X.

Ces roues sont dites axiales-radiales dans la mesure où elles sont adaptées à aspirer l'air selon leur axe commun X (voir les flèches F) et à souffler de l'air dans une direction radiale à cet axe X (voir les flèches G).

Ces roues soufflantes 58 sont actionnées par un même moteur 59 monté sur l'axe commun X.

Ce moteur 59 est de préférence placé à l'extérieur de la zone à réguler en température afin de ne pas apporter d'échauffement supplémentaire dans cette zone, notamment lors du fonctionnement en mode de refroidissement de la cavité 54.

La roue soufflante 58 située à l'extérieur de la cavité 54 permet de créer une ventilation externe au niveau des canaux 53 de l'appareil. Cette circulation d'air va permettre d'évacuer l'énergie thermique dégagée par la face externe du module à effet thermoélectrique 10, grâce au dissipateur d'énergie thermique 20 associé, vers l'extérieur de l'appareil électrique domestique.

En pratique, comme bien illustré sur la figure 4, l'air entrant sur un des côtés du tiroir 50 (à gauche de la figure 4) est réchauffé ou refroidi en traversant le dissipateur d'énergie thermique 20 disposé à l'extérieur de la cavité 54 et est évacué sur l'autre côté du tiroir (côté droit de la figure 4).

Parallèlement, une circulation d'air est créée à l'intérieur de la cavité 54. Dans ce mode de réalisation dans lequel les moyens de génération d'énergie thermique 56 sont disposés au fond de la cavité 54 du tiroir 50, l'air est aspiré au niveau d'une roue soufflante 58 du ventilateur (sur le côté gauche de la figure 5) et refroidi ou réchauffé en traversant le dissipateur d'énergie thermique 20 disposé à l'intérieur de la cavité 54 avant d'être réintroduit de l'autre côté du tiroir (côté droit de la figure 5).

Cette rotation d'air permet d'assurer une mise en température homogène des éléments placés dans la cavité 54 du tiroir 50.

On notera que les circulations d'air externe et interne à la cavité 54 n'ont aucune influence l'une sur l'autre du fait de la présence de la paroi isolante 52 permettant de séparer les flux d'air.

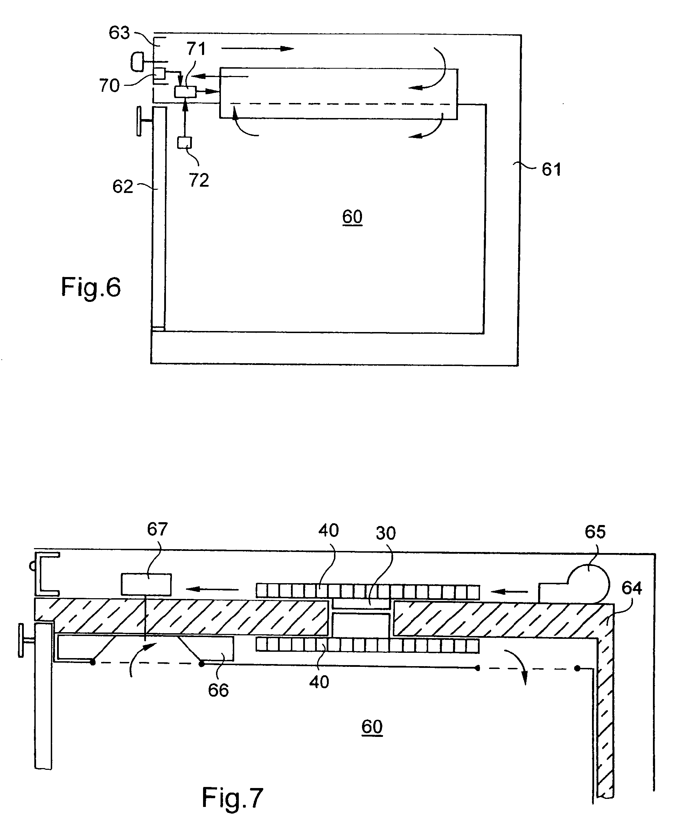

On va décrire à présent en référence aux figures 6 et 7 un second mode de réalisation d'un appareil électrique domestique conforme à l'invention.

De manière générale, cet appareil électrique domestique se présente sous la forme d'un four. Il comporte une cavité 60 intégrée dans un meuble carcasse 61 qui peut être encastré dans une niche d'une cuisine équipée.

Dans un tel appareil électrique domestique, la cavité 60 est fermée par une porte pivotante 62 et un bandeau de commande 63 peut être disposé en partie haute de l'appareil, sur la façade de celui-ci.

Comme précédemment, le meuble carcasse 61 permet d'assurer le maintien mécanique de l'ensemble de l'appareil, de l'isoler thermiquement de l'environnement ainsi que d'assurer l'écoulement des flux d'air.

Dans une telle cavité 60, des gradins (non représentés) peuvent être prévus de manière à pouvoir disposer différentes grilles adaptées à supporter des éléments dans la cavité 60.

Comme bien illustré à la figure 7, un module à effet Peltier 30 tel que décrit précédemment en référence à la figure 3 est ici associé à cette cavité 60, avec des dissipateurs d'énergie thermique 40 disposés de part et d'autre du module à effet thermoélectrique 30. Ainsi, l'un des dissipateurs d'énergie thermique 40 est disposé à l'extérieur de la cavité 60, alors que l'autre dissipateur d'énergie thermique 40 est disposé à l'intérieur de la cavité 60.

Une paroi isolante 64 s'étendant autour de la cavité 60 permet de limiter l'échange de chaleur entre l'intérieur de cette cavité et l'extérieur.

Des moyens de ventilation associés à ces dissipateurs d'énergie thermique 40 sont également prévus. Ainsi, à l'extérieur de la cavité 60, un élément de ventilation constitué d'une tangentielle 65 est disposé dans une portion supérieure de l'appareil électrique domestique, à l'opposé du bandeau de commande 63.

Cette tangentielle 65 est adaptée à créer une circulation d'air qui permettra d'évacuer l'énergie thermique produite par la face externe du module à effet thermoélectrique 30 vers l'extérieur de l'appareil. Ainsi, l'air est aspiré au niveau du bandeau de commande 63, au travers de trous ou de fentes. L'air sera refroidi ou réchauffé au contact du dissipateur d'énergie thermique 40 puis évacué vers l'extérieur également au niveau de bandeau commande 63.

Il est important, lors du fonctionnement du ventilateur tangentiel 65, que le flux d'air entrant ne soit pas perturbé par le flux d'air sortant.

A l'intérieur de la cavité 60, un second élément de ventilation permettra de créer une rotation de l'air à l'intérieur de cette cavité 60.

Cet élément de ventilation peut être constitué d'une roue soufflante à effet axial-radial 66, telle que décrite précédemment en référence à la figure 5, montée en rotation sur un moteur 67.

Cette roue soufflante 66 permet d'aspirer l'air d'un côté de la cavité (ici en façade de la cavité), cet air étant réchauffé ou refroidi au contact du dissipateur d'énergie thermique 40 placé à l'intérieur de la cavité 60, afin d'être réintroduit dans le fond de la cavité 60.

Comme précédemment, en notera que les circulations d'air externe et interne n'ont aucune influence l'une sur l'autre du fait de la séparation des canaux aérauliques par la paroi isolante 64.

Il est également important de veiller à ce que le système de ventilation interne, et notamment le moteur 67, ne dissipe pas une chaleur trop importante par effet Joule, notamment lorsque l'appareil électrique domestique fonctionne en mode froid. Le choix du ventilateur 66, 67 résultera ainsi d'un compromis entre l'efficacité de l'échange thermique et la puissance dissipée par ce ventilateur.

Bien entendu, dans les modes de réalisation décrits précédemment en référence aux figures 4 à 7, le système d'échangeur thermique tel qu'illustré aux figures 1 et 2 pourrait également être utilisé dans une cavité de four du type de celle illustrée sur les figures 6 et 7, et réciproquement, un dispositif d'échangeur thermique tel qu'illustré à la figure 3 pourrait être utilisé dans un tiroir 50 tel qu'illustré aux figures 4 et 5.

Dans l'un ou l'autre des appareils électriques domestiques décrits précédemment en référence aux figures 4 et 6, un système de régulation est prévu permettant la régulation de la température dans les cavités 54, 60.

A cet effet, ces appareils comportent des moyens d'acquisition 70 d'une valeur de température de consigne.

Ces moyens d'acquisition 70 d'une température de consigne sont généralement accessibles sur le bandeau de commande 55, 63 et permettent à l'utilisateur de fixer une valeur de température de consigne.

Typiquement, cette valeur de température de consigne est comprise dans une plage de températures allant de -30°C à 100°C.

Des moyens de régulation 71 de la température de la cavité 54, 60 sont adaptés à commander le fonctionnement du module à effet thermoélectrique 10, 30 en fonction de cette valeur de température de consigne.

Cette régulation peut être assurée au moyen d'une électronique de commande de chaque module à effet thermoélectrique 10, 30.

Elle est réalisée en prenant en compte également la température à l'intérieur de la cavité 54, 60 qui peut être mesurée de manière classique au moyen d'un capteur 72 de température type CTN.

Comme expliqué précédemment, chaque module à effet thermoélectrique peut alternativement présenter une face chaude ou froide vers l'intérieur de la cavité 54, 60.

Les moyens de régulation 70 sont ainsi adaptés à commander en fonctionnement le module à effet thermoélectrique 10, 30 selon un premier mode d'alimentation et un second mode d'alimentation correspondant alternativement à la génération de chaleur ou de froid dans la cavité 54, 60.

L'alternance du premier mode d'alimentation au second mode d'alimentation et vice versa, est obtenue par inversion du sens d'alimentation électrique en courant continu du module à effet thermoélectrique.

Ainsi, la génération de froid ou de chaud à l'intérieur de la cavité 54, 60 peut être réalisée en alternant le sens d'alimentation en courant électrique du module thermoélectrique 10.

On va décrire à présent le fonctionnement de ces appareils adaptés à mettre en oeuvre un procédé de génération d'énergie thermique dans la cavité 54,60.

A partir de l'acquisition d'une valeur de température de consigne comprise entre -30°C et 100°C, les moyens de régulation 70 commandent le fonctionnement du module à effet thermoélectrique 10, 30.

En pratique, le procédé consiste tout d'abord à comparer la valeur de la température de consigne demandée par un utilisateur avec des sous-plages de températures prédéterminées et mémorisées dans l'appareil.

En pratique, deux sous-plages de températures peuvent être définies :
- une première sous-plage de températures, comprises entre -30°C et 18°C, correspondant à une commande de fonctionnement en mode froid de l'appareil, et
- une seconde sous-plage de températures, comprises entre 30°C et 100°C, correspondant à une commande de fonctionnement en mode chaud de l'appareil.

Selon que la valeur de consigne acquise appartient à l'une ou l'autre de ces sous-plages de températures, il est possible de déterminer le mode d'alimentation correspondant du module à effet thermoélectrique.

En pratique, si la température de consigne appartient à la sous-plage de températures comprises entre 30°C et 100°C, le mode d'alimentation du module à effet thermoélectrique est choisi de telle sorte que la face chaude de ce module à effet thermoélectrique 10, 20 corresponde à la face dirigée vers l'intérieur de la cavité 54, 60.

A contrario, si la température de consigne demandée appartient à la sous-plage de températures comprises entre -30°C et 18°C, le mode d'alimentation du module à effet thermoélectrique 10, 30 est choisi de telle sorte que la face dirigée vers l'intérieur de cette cavité corresponde à la face froide.

Le mode d'alimentation du module à effet thermoélectrique étant ainsi déterminé, les moyens de régulation commandent en fonctionnement le module à effet thermoélectrique selon ce premier mode d'alimentation.

Comme expliqué précédemment, ce mode d'alimentation correspond à un sens d'alimentation en courant continu.

De manière classique, la régulation de la température au sein de la cavité par rapport à la température de consigne demandée par l'utilisateur est ensuite réalisée par une régulation classique du type Proportionnel Dérivé ou Proportionnel Intégral Dérivé.

En pratique, le module à effet thermoélectrique fonctionne par intermittence pour maintenir la valeur à l'intérieur de la cavité au voisinage de la valeur de la température de consigne requise.

Ainsi, l'appareil électrique domestique conforme à l'invention peut fonctionner selon deux modes de fonctionnement, respectivement appelés fonctionnement en mode "froid" et fonctionnement en mode "chaud".

Dans le mode "froid", la température à l'intérieur de la cavité 58, 60 est refroidie ou maintenue à une température comprise entre -30°C et 18°C. Le système de circulation d'air assuré dans un tel mode de fonctionnement a un double rôle :
- transférer les frigories de la face froide du module à effet thermoélectrique vers l'intérieur de la cavité 54, 60, grâce au moyen de dissipation thermique 40 ; et
- évacuer les calories issues de la face chaude du module à effet thermoélectrique vers l'extérieur de l'appareil électrique domestique.

Lors du fonctionnement en mode "chaud", la température à l'intérieur de la cavité 54, 60 est réchauffée ou maintenue à une température comprise entre 30°C et 100°C.

Comme précédemment, le système de circulation d'air permet d'une part d'apporter de l'air chaud vers l'intérieur de la cavité 54, 60 et d'évacuer vers l'extérieur l'air froid.

Pendant la commande en fonctionnement du module à effet thermoélectrique 10, 30 selon un premier mode d'alimentation, l'utilisateur peut souhaiter attribuer une autre valeur de température de consigne à l'appareil électrique domestique.

La comparaison de cette autre valeur de température de consigne avec les sous-plages de températures définies précédemment peut conduire à la détermination d'un second mode d'alimentation du module à effet thermoélectrique, opposé au premier mode d'alimentation du module à effet thermoélectrique.

Les moyens de régulation sont alors adaptés à commander en fonctionnement le module à effet thermoélectrique selon ce second mode d'alimentation.

On notera que cette alternance d'un premier à un second mode de fonctionnement peut être également commandée automatiquement par l'appareil au moyen d'un programmateur. L'utilisateur peut ainsi commander un fonctionnement en mode "froid", puis programmer le passage en fonctionnement en mode "chaud" à une heure prédéterminée ou à l'issue d'un laps de temps prédéfini.

En pratique, les moyens de régulation sont adaptés à inverser le sens d'alimentation en courant électrique continu du module à effet thermoélectrique 10, 30.

Il s'agit ainsi de passer d'un mode de fonctionnement "chaud" à un mode de fonctionnement "froid" du module à effet thermoélectrique et réciproquement. Dans ce cas, et afin d'éviter une rupture du module à effet thermoélectrique du fait d'une inversion trop brusque des échanges thermiques entre ces deux faces, le procédé de génération d'énergie thermique comprend, avant d'alterner un premier mode d'alimentation et un second mode d'alimentation du module à effet thermoélectrique 10, 30, une étape d'extinction totale de l'alimentation électrique du module à effet thermoélectrique 10, 30 et une étape d'extinction des moyens de ventilation 57, 65, 66, 67 associés au module à effet thermoélectrique 10, 30 et aux moyens de dissipation thermique 20, 40.

Cette extinction de l'alimentation électrique et des moyens de ventilation permet d'accélérer le transfert de chaleur d'une face à l'autre du module à effet thermoélectrique 10, 30 et la diminution de l'écart de température entre ces deux faces.

En effet, en fonctionnement, la différence de température entre la face chaude et la face froide du module à effet thermoélectrique est d'environ 60°C.

Lors de l'extinction de l'alimentation en courant du module, un transfert de chaleur entre les deux faces du module à effet thermoélectrique est réalisé par conduction.

Afin d'accélérer le transfert de calories et ainsi de diminuer le temps d'attente, les moyens de ventilation associés à ce module à effet thermoélectrique sont également arrêtés.

Afin de déterminer le moment auquel le mode d'alimentation du module à effet thermoélectrique peut être alterné, le procédé met en oeuvre une étape d'obtention d'une valeur représentative de l'écart de température entre les deux faces du module à effet thermoélectrique 10, 30.

En pratique, cette valeur peut être obtenue en disposant des capteurs de température de chaque côté du module à effet thermoélectrique.

On peut également mesurer une tension aux bornes du module à effet thermoélectrique, cette tension étant directement fonction de la différence de températures entre les faces du module à effet thermoélectrique.

Une étape de comparaison de cette valeur représentative de l'écart de température est mise en oeuvre pour comparer cette valeur à une valeur de seuil prédéterminée. Lorsque cette valeur représentative de l'écart de température est inférieure à la valeur de seuil prédéterminée, il est possible de commander en fonctionnement le module à effet thermoélectrique selon un second mode d'alimentation, alterné par rapport au premier mode d'alimentation.

Cette valeur de seuil prédéterminée peut être fixée à titre d'exemple non limitatif à environ 10°C.

Lorsque l'écart de température entre les deux faces du module à effet thermoélectrique est inférieur à cette valeur de 10°C, il est possible d'inverser la polarité aux bornes du module à effet thermoélectrique afin d'inverser le sens d'alimentation en courant électrique continu.

Selon l'invention, on obtient un appareil électrique domestique permettant à la fois de générer du chaud et du froid dans une cavité 58, 60, de manière régulée.

En pratique, la valeur de consigne peut être fixée entre -30°C et 100°C.

Dans ce mode de réalisation, l'utilisateur ne peut choisir une valeur de température de consigne comprise entre 18°C et 30°C, dès lors que la détermination du mode de fonctionnement du module à effet thermoélectrique, entre la génération de chaud ou de froid, ne peut être déterminée de manière certaine par rapport à la température ambiante.

Bien entendu, le système de régulation pourrait être complété à partir de l'utilisation d'un capteur d'un température ambiante extérieure à l'appareil électrique domestique, permettant en outre de comparer la valeur de la température de consigne à la valeur de température ambiante et de déterminer de manière certaine le mode de fonctionnement du module à effet thermoélectrique.

Cet appareil électrique domestique permet ainsi au sein d'une cavité unique la gestion de températures dans une très large gamme, permettant la surgélation à -30°C, la congélation à -18°C, la décongélation et le maintien au froid à des températures comprises entre 4°C et 6°C, le réchauffage et le maintien au chaud à des températures comprises entre 30°C et 100°C.

Il permet d'assurer à la fois une fonction de chauffage et de refroidissement en n'utilisant qu'une seule source thermique, formée d'une Cellule à Effet Peltier.

Ce type d'appareil joue ainsi un rôle complémentaire par rapport à un four traditionnel ou un réfrigérateur et permet en outre dans une même cavité de passer d'un mode de fonctionnement à un autre.

Il est ainsi facile de passer d'un mode de fonctionnement à l'autre, par exemple d'un mode de conservation à un mode de réchauffage, ou encore d'un mode de maintien au chaud à un mode de conservation au froid.

A titre d'exemples non limitatifs, cet appareil électrique domestique peut être utilisé dans différents types d'application :
- réchauffer ou refroidir des préparations ou plats (ramollissement de pâtes pour pétrissage, refroidissement de sauces... ;
- décongeler des aliments ;
- porter un vin à une température de dégustation ;
- faciliter la préparation d'un repas (chauffe-plat, levage d'une pâte à pain, maintien au frais d'un plat de fruits de mer) ;
- améliorer le déroulement d'un repas (maintien au chaud de préparations en attendant leur service, mise au frais de boissons ou différents plats).

il est également possible de programmer le réchauffage d'un aliment à l'avance, cet aliment pouvant être conservé au froid dans un mode de fonctionnement de l'appareil, puis automatiquement être réchauffé à une heure donnée dans l'appareil grâce à l'inversion du mode de fonctionnement de cet appareil.

En outre, cet appareil peut être utilisé pour chauffer ou refroidir de la vaisselle ou encore différents types d'objet nécessitant une mise en température.

Bien entendu, de nombreuses modifications peuvent être apportées aux exemples de réalisation décrits précédemment sans sortir du cadre de l'invention.

Ainsi, une cale identique à la cale 31 décrite en référence à la figure 3, pourrait être ajoutée dans le mode de réalisation décrit en référence aux figures 1 et 2.

En outre, on pourrait également associer plusieurs cellules à effet Peltier dans une même cavité de telle sorte que la température de consigne pourrait être fixée au-delà de 100°C, jusqu'à environ 150°C.

## Revendications

1. Procédé de génération d'énergie thermique dans une cavité (54,60) d'un appareil électrique domestique, **caractérisé en ce qu'**il comprend les étapes suivantes :
- acquisition d'une valeur de température de consigne dans une plage de températures comprise entre -30°C et 100°C ; et
- régulation de la température de ladite cavité (54, 60) en fonction de la valeur de la température de consigne, au moyen de la commande en fonctionnement d'un module à effet thermoélectrique (10, 30).

2. Procédé de génération d'énergie thermique conforme à la revendication 1, **caractérisé en ce qu'**il comporte les sous-étapes suivantes :
- détermination d'un premier mode d'alimentation dudit module à effet thermoélectrique en fonction de la valeur de la température de consigne ; et
- commande en fonctionnement dudit module à effet thermoélectrique selon ledit premier mode d'alimentation.

3. Procédé de génération d'énergie thermique conforme à la revendication 2, **caractérisé en ce que**, pendant la commande en fonctionnement dudit module à effet thermoélectrique selon ledit premier mode d'alimentation, ledit procédé comporte les étapes suivantes :
- détermination d'un second mode d'alimentation dudit module à effet thermoélectrique en fonction de la valeur d'une autre température de consigne ; et
- commande en fonctionnement dudit module à effet thermoélectrique selon ledit second mode d'alimentation.

4. Procédé de génération d'énergie thermique conforme à la revendication 3, **caractérisé en ce que** l'alternance entre le premier mode d'alimentation et le second mode d'alimentation est obtenue par inversion du sens de l'alimentation électrique du module à effet thermoélectrique.

5. Procédé de génération d'énergie thermique conforme à l'une des revendications 3 ou 4, **caractérisé en ce qu'**il comprend entre les étapes de commande en fonctionnement dudit module à effet thermoélectrique respectivement selon ledit premier mode d'alimentation et ledit second mode d'alimentation, les étapes suivantes :
- extinction de l'alimentation électrique dudit module à effet thermoélectrique (10, 30) ; et
- extinction de moyens de ventilation (57, 66, 67) associés audit module à effet thermoélectrique.

6. Procédé de génération d'énergie thermique conforme à la revendication 5, **caractérisé en ce qu'**il comprend en outre les étapes suivantes :
- obtention d'une valeur représentative de l'écart de température entre une face dite "chaude" et une face dite "froide" du module à effet thermoélectrique ;
- comparaison de ladite valeur représentative de l'écart de température à une valeur de seuil prédéterminée ; et
- commande en fonctionnement dudit module à effet thermoélectrique selon ledit second mode d'alimentation lorsque ladite valeur représentative de l'écart de température est inférieure à la valeur de seuil.

7. Procédé de génération d'énergie thermique conforme à la revendication 6, **caractérisé en ce qu'**à ladite étape d'obtention, la valeur représentative de l'écart de température est une valeur de tension aux bornes du module à effet thermoélectrique.

8. Procédé de génération d'énergie thermique conforme à l'une des revendications 6 ou 7, **caractérisé en ce que** ladite valeur de seuil prédéterminée est sensiblement égale à 10°C.

9. Procédé de génération d'énergie thermique conforme à l'une des revendications 2 à 8, **caractérisé en ce qu'**un mode d'alimentation dudit module à effet thermoélectrique est déterminé en fonction de l'appartenance de ladite valeur de température de consigne à une sous-plage de températures choisie parmi au moins deux sous-plages de températures.

10. Procédé de génération d'énergie thermique conforme à la revendication 9, **caractérisé en ce qu'**une première sous-plage de températures est comprise entre -30°C et 18°C et qu'une deuxième sous-plage de températures est comprise entre 30°C et 100°C.

11. Appareil électrique domestique comprenant une cavité (54, 60) et des moyens de génération d'énergie thermique dans cette cavité, **caractérisé en ce qu'**il comprend un module à effet thermoélectrique (10, 30) adapté à délivrer une énergie thermique à ladite cavité (54, 60), des moyens d'acquisition (70) d'une valeur de température de consigne dans une plage de températures comprise entre -30°C et 100°C et des moyens de régulation (71) de la température de ladite cavité (54, 60) adaptés à commander le fonctionnement du module à effet thermoélectrique en fonction de la valeur de la température de consigne.

12. Appareil électrique domestique conforme à la revendication 11, **caractérisé en ce que** les moyens de régulation sont adaptés à commander en fonctionnement ledit module à effet thermoélectrique selon un premier mode d'alimentation et un second mode d'alimentation correspondant alternativement à la génération de chaud et de froid dans ladite cavité par une face dudit module à effet thermoélectrique.

13. Appareil électrique domestique conforme à l'une des revendications 11 ou 12, **caractérisé en ce que** le module à effet thermoélectrique (10, 30) comprend deux faces dites alternativement "chaude" ou "froide", lesdites faces étant associées respectivement à des dissipateurs d'énergie thermique (20, 40) et des moyens de ventilation (57, 66, 67) des dissipateurs.
